# EUROPÄISCHE PATENTANMELDUNG

(11) **EP 2 383 170 A1**
(43) Veröffentlichungstag der Anmeldung: **02.11.2011**
(21) Anmeldenummer: 10167609.6
(22) Anmeldetag: 29.06.2010
(51) Int. Cl.: B62D 29/00, B62D 25/04

(54) **Vorrichtung zur Verstärkung von Hohlprofilen oder U-Profilen sowie damit verstärktes Profil**

(30) Priorität: 02.07.2009 EP 09164469
(71) Anmelder: BASF SE, 67056 Ludwigshafen (DE)
(72) Erfinder: Fischer-Jerdonek, Kamil, 67227, Frankenthal (DE); Wüst, Andreas, 64673, Zwingenberg (DE); Weiler, Helge, 60528, Frankfurt (DE); Fertig, Daniel, 64653, Lorsch (DE)
(74) Vertreter: Jacobi, Markus Alexander

(57) **Zusammenfassung**

Die Erfindung betrifft eine Vorrichtung zur Verstärkung von Hohlprofilen oder U-Profilen (1), umfassend ein Einlegeteil (5), das in das Hohlprofil oder U-Profil (1) einlegbar ist und an seinen Endabschnitten (9) mit dem Hohlprofil oder U-Profil (1) verbindbar ist, wobei das Einlegeteil (5) aus einem Material mit einer hohen Zugfestigkeit gefertigt ist. Die Erfindung betrifft weiterhin ein Profil umfassend ein Einlegeteil (5), das aus einem Material mit einer hohen Zugfestigkeit gefertigt ist, sowie mindestens ein Abstandselement (11), das zwischen dem Einlegeteil (5) und dem Profil (1) positioniert ist, wobei das Einlegeteil (5) zumindest mit seinen Endabschnitten (9) an einer Wandung des Profils (1) befestigt ist. Ferner betrifft die Erfindung auch eine Verwendung des Profils.

## Beschreibung

Die Erfindung betrifft eine Vorrichtung zur Verstärkung von Hohlprofilen oder U-Profilen, umfassend ein Einlegeteil, das in das Hohlprofil oder U-Profil einlegbar ist und an seinen Enden mit dem Hohlprofil oder U-Profil verbindbar ist. Die Erfindung betrifft weiterhin ein Profil umfassend ein Einlegeteil.

Durch geeignete Gestaltung und Verbindung von Hohlprofilen oder U-Profilen können zum Beispiel Tragstrukturen hergestellt werden. Derartige Tragstrukturen finden beispielsweise im Kraftfahrzeugbau Einsatz. So werden in einem Kraftfahrzeug z.B. A-, Bund C-Säulen aus Hohlprofilen gefertigt. Gegenüber einem Vollmaterial hat ein Hohlprofil den Vorteil, dass dieses sehr viel weniger Material benötigt und damit leichter ist. Neben dem Einsatz als A-, B- und C-Säule können Hohlprofile auch an anderen Bereichen der Karosserie Einsatz finden. So sind zum Beispiel auch Stoßfänger üblicherweise als Profile gestaltet.

Im Falle eines Unfalls können im Allgemeinen große Kräfte auf die Fahrzeugkarosserie wirken. Diese müssen von der Karosserie absorbiert werden, ohne dass es zu einer starken Verformung der Fahrgastzelle kommt, um die Insassen des Kraftfahrzeuges zu schützen. Hierzu ist es bekannt, insbesondere die zur Verstärkung der Seitenelemente und der Stoßfänger eingesetzten Hohlprofile zu verstärken. Die Verstärkung erfolgt durch Einsatz eines Verstärkungselements im Hohlprofil. Aus DE-A 10 2007 025 930 ist es zum Beispiel bekannt, ein Verstärkungselement in einen Fahrzeughohlkörper einzubringen, wobei das Verstärkungselement aus einem länglichen, schalenförmigen Grundkörper gefertigt ist, dessen Innenraum Verstärkungsrippen aufweist, die mit dem Grundkörper fest verbunden sind. Die Verstärkungsrippen bestehen aus einem angespritzten Kunststoff und die Verbindung mit dem Grundkörper erfolgt an diskreten Verbindungsstellen über Durchbrüche im Grundkörper, durch die der Kunststoff hindurch-und über die Flächen der Durchbrüche hinausreicht. Über einen Abschnitt der Oberfläche der starren Strukturverstärkung und des länglichen, schalenförmigen Grundkörpers ist ein ausdehnbares Klebstoffmaterial aufgebracht, wobei die Form der starren Strukturverstärkung und des länglichen Grundkörpers sowie die Menge und Verteilung des ausdehnbaren Klebstoffs so gewählt sind, dass das Klebstoffmaterial beim Ausdehnen nicht die Innenfläche des äußeren Blechs des zu verstärkenden Karosseriehohlraums berührt und wenigstens einen Teil der anderen Innenwände des zu verstärkenden Karosseriehohlraums berührt und daran haftet.

Nachteil des Verstärkungselementes ist, dass dieses nur in Hohlprofilen einsetzbar ist. Zudem muss das Bauteil das Hohlprofil in Beanspruchungsrichtung vollständig ausfüllen, da es sich auf der Gegenseite abstützt. Ein weiterer Nachteil ist, dass ein weiterer Werkstoff benötigt wird. Dies erfordert zusätzliche Prozessschritte und bedingt zusätzliche Ungenauigkeiten in der Simulation. Auch sind die verklebten Flächen für einen nachträglich eingebrachten Korrosionsschutz, zum Beispiel durch kathodische Tauchlackierung, nicht mehr zugänglich.

Aus dem Stand der Technik bekannte Einlegeteile werden üblicherweise mit einem Schaum befestigt. Nachteil der üblicherweise eingesetzten Schäume ist, dass diese in ihren mechanischen Eigenschaften nach dem Expandieren unvorteilhaft sind. Die Schäume sind im Allgemeinen spröde und weisen eine geringe Festigkeit, insbesondere auf Schub und Zug, auf.

Aus dem Stand der Technik bekannte Einlegeteile werden üblicherweise mit einem Schaum befestigt. Dies hat den Nachteil, dass für einen Ausgleich von Fertigungstoleranzen der Schaum elastisch sein muss. Eine feste Verbindung von Einlegeteil und Profil ist auf diese Weise nicht möglich.

Aufgabe der vorliegenden Erfindung ist es, eine Vorrichtung zur Verstärkung von Hohlprofilen oder U-Profilen bereitzustellen, die nicht die aus dem Stand der Technik bekannten Nachteile aufweist.

Gelöst wird die Aufgabe durch eine Vorrichtung zur Verstärkung von Hohlprofilen oder U-Profilen, umfassend ein Einlegeteil, das in das Hohlprofil oder U-Profil einlegbar ist und an seinen Enden mit dem Hohlprofil oder U-Profil verbindbar ist, wobei das Einlegeteil aus einem Material mit einer hohen Zugfestigkeit gefertigt ist.

Weiterhin wird die Aufgabe gelöst durch ein Profil umfassend ein Einlegeteil, das aus einem Material mit einer hohen Zugfestigkeit gefertigt ist, sowie mindestens ein Abstandselement, das zwischen dem Einlegeteil und dem Profil positioniert ist, wobei das Einlegeteil zumindest mit seinen Endbereichen an einer Wandung des Profils befestigt ist.

Hohe Zugfestigkeit im Rahmen der vorliegenden Erfindung bedeutet, dass die Zugfestigkeit um eine Größenordnung oder mehr über der Zugfestigkeit des Abstandselements liegt. Dabei kann es sich, muss aber nicht, um einen Werkstoff mit stark anisotropen Eigenschaften handeln.

Vorteil des Einsatzes eines Einlegeteils, das aus einem Material mit einer hohen Zugfestigkeit gefertigt ist, ist, dass das Einlegeteil nur an einer Fläche des Hohlprofils oder U-Profils befestigt wird, wobei die Montage so vorzusehen ist, dass zwischen dem Einlegeteil und dem Hohlprofil ein Abstand ist. Bei einer auf das Profil wirkenden Belastung, zum Beispiel Zug, Druck, Biegung oder Torsion, wird ein Teil der Belastung vom Einlegeteil aufgenommen. Dies führt zu einer Verstärkung des Hohlprofils oder U-Profil.

Der notwendige Abstand zwischen dem Einlegeteil und dem Profil, damit das Einlegeteil die auf das Profil wirkenden Kräfte aufnehmen kann, wird zum Beispiel durch Einsatz des Abstandselements erzielt. Wenn das Abstandselement eingesetzt wird, werden Kräfte, die auf das Profil wirken, über das Abstandselement an das Einlegeteil übertragen. Damit die Kräfte übertragen werden können, ist das Abstandselement so ausgebildet, dass dieses mit einer Seite am Profil und mit der anderen Seite am Einlegeteil anliegt.

Materialien mit einer hohen Zugfestigkeit, aus denen das Einlegeteil gefertigt werden kann, sind zum Beispiel ausgewählt aus der Gruppe bestehend aus Stahl, Leichtmetall, faserverstärkten Polymeren oder Fasern. Wenn als Material für das Einlegeteil faserverstärkte Polymere eingesetzt werden, so eignen sich insbesondere glasfaserverstärkte Kunststoffe oder kohlenfaserverstärkte Kunststoffe. Die Faserausrichtung erfolgt dabei vorzugsweise in Belastungsrichtung. Als Fasern, die eingesetzt werden können, sind Glasfasern, Kohlenstofffasern oder Aramidfasern bevorzugt. Vorzugsweise werden bei Einsatz von faserverstärkten Polymeren solche mit Langfasern eingesetzt. Die Fasern können dabei zum Beispiel in Form von Rovings oder Geweben eingesetzt werden. Auch ist es möglich, Faserstränge zu verwenden.

Wenn als Material für das Einlegeteil Fasern verwendet werden, so sind insbesondere Aramidfasern, Glasfasern oder Kohlenstofffasern bevorzugt.

Geeignete Leichtmetalle, aus denen das Einlegeteil gefertigt werden kann, sind zum Beispiel Aluminium, Magnesium, Nickelbasiswerkstoffe oder ähnliche.

Als Polymermaterial bei Verwendung von faserverstärkten Polymeren eignen sich thermoplastische oder duroplastische Kunststoffe. Bevorzugt sind thermoplastische Kunststoffe, insbesondere Polyamide (PA), Polybutylenterephthalat (PBT), Polypropylen (PP), Polyethylen (PE), Polyethersulfon (PES) und Polysulfon (PSU). In thermisch außerordentlich hoch beanspruchten Bereichen sind zum Beispiel auch Polyetherketone anwendbar.

Das Einlegeteil aus dem Material mit einer hohen Zugfestigkeit kann zum Beispiel in Form eines Flachbandes, eines Rohres mit beliebigem Querschnitt oder als Seil ausgebildet sein. Wenn das Einlegeteil als Rohr oder als Seil ausgebildet ist, so ist es insbesondere dazu geeignet, Zugkräfte aufzunehmen. Bei Gestaltung als Rohr kann das Einlegeteil zusätzlich auch mehrachsige Belastungen aufnehmen.

Um auf das Einlegeteil wirkenden Torsionskräfte aufnehmen zu können, ist das Einlegeteil, wenn es in Form eines Flachbandes gestaltet ist, vorzugsweise bombiert.

Eine weitere Verstärkung des Einlegeteils, insbesondere um Biegekräfte aufnehmen zu können, wird dadurch erzielt, dass das Einlegeteil gefalzt ist oder dass Sicken im Einlegeteil ausgebildet sind. Auch können am Einlegeteil Stege ausgebildet sein oder das Einlegeteil als Profil, beispielsweise als U-Profil ausgebildet sein. Durch diese Gestaltung wird die Festigkeit des Einlegeteils erhöht und es können größere Kräfte vom Einlegeteil aufgenommen werden. Um eine größere Kraft aufnehmen zu können ist insbesondere auch eine Kombination von zwei oder mehreren der vorstehend genannten Gestaltungsmöglichkeiten denkbar.

Um das Einlegeteil am Profil befestigen zu können, sind bei Gestaltung als Seil oder als Rohr oder auch bei Ausbildung des Einlegeteils als Profil die Enden vorzugsweise abgeflacht. Mit den abgeflachten Enden kann das Einlegeteil dann auf einfache Weise mit dem Profil verbunden werden.

Die Art der Verbindung des Einlegeteils mit dem Profil ist abhängig vom eingesetzten Material für das Einlegeteil. Bei Fertigung des Einlegeteils aus Stahl und Einsatz in einem stählernen Profil ist es insbesondere bevorzugt, das Einlegeteil mit dem Profil zu verschweißen. Neben dem Verschweißen ist aber auch jede beliebige andere lösbare oder nicht-lösbare Verbindung von Profil und Einlegeteil möglich. So ist es zum Beispiel möglich, insbesondere wenn Einlegeteil und Profil aus unterschiedlichen Werkstoffen gefertigt sind, das Einlegeteil durch Löten, Kleben, Nieten oder Schrauben mit dem Profil zu verbinden.

Damit eine Kraft, die auf das Hohlprofil bzw. U-Profil wirkt, auf das Einlegeteil übertragen werden kann, ist zwischen dem Einlegeteil und der Innenwand des Profils das Abstandselement positioniert. Durch die Verwendung des Abstandselements, das vorzugsweise die gleiche Länge wie das Einlegeteil aufweist, wird eine auf das Profil wirkende Kraft gleichmäßig auf das Einlegeteil übertragen.

Insbesondere bei Einsatz des Profils zur Herstellung von Kraftfahrzeugen kann es vorteilhaft sein, wenn das Abstandselement so ausgelegt ist, dass dieses bei Krafteinwirkung gezielt versagt. Auf diese Weise können zum Beispiel bei einem Unfall auftretende Kräfte teilweise vom Abstandselement absorbiert werden. Hierzu ist das Abstandselement vorzugsweise in Form einer Rippenstruktur ausgebildet, wobei bei Einwirken einer entsprechend großen Kraft die Rippen brechen und dadurch Energie absorbiert wird.

Bei Einsatz eines zäheren Materials, das nicht bricht, wird die Energie zum Beispiel durch Verformung des Abstandselements absorbiert. Eine solche Verformung tritt zum Beispiel ein, wenn das Abstandselement aus einem Metallschaum oder einer Wabenstruktur gefertigt ist. Die Wabenstruktur kann dabei entweder aus einem metallischen Werkstoff oder aus einem polymeren Werkstoff hergestellt sein. Um ein gezieltes Versagen, zum Beispiel durch Verformen der Waben zu ermöglichen, werden die Waben vorzugsweise so ausgerichtet, dass deren Achse nicht senkrecht zum Einlegeteil und Profil ausgerichtet ist. Wenn Waben eingesetzt werden, können diese jede beliebige Form aufweisen. Üblicherweise werden jedoch viereckige oder sechseckige Waben eingesetzt. Wenn viereckige Waben eingesetzt werden, so können diese rechteckig, trapezförmig oder vorzugsweise quadratisch sein.

Bevorzugt ist es jedoch, dass das Abstandselement mit einer ersten Oberfläche an dem Profil und mit einer zweiten Oberfläche am Einlegeteil anliegt und zwischen den Oberflächen eine Rippenstruktur ausgebildet ist. Die Rippenstruktur kann dabei jede beliebige, dem Fachmann bekannt Form einnehmen. So ist es zum Beispiel möglich, parallel angeordnete Rippen zu gestalten. Auch können die Rippen so gestaltet sein, dass sich diese kreuzen.

Neben dem Einsatz einer Rippenstruktur ist es weiterhin möglich, dass die die Oberflächen des Abstandselements bildenden Wandungen mit rohrförmigen Elementen, die einen gleich bleibenden Querschnitt haben können oder zum Beispiel auch in Form von Kegelstümpfen ausgebildet sein können, miteinander verbunden sind. Wenn die Elemente in Form von Kegelstümpfen ausgebildet sind, so können diese alle in die gleiche Richtung weisen oder aber wechselweise einmal mit der Seite mit größerem Durchmesser und einmal mit der Seite mit kleinerem Durchmesser mit einer Wandung verbunden sein. Die einzelnen rohrförmigen Elemente können zusätzlich zum Beispiel durch Stege miteinander verbunden sein.

Eine entsprechende Gestaltung mit einer ersten und einer zweiten Wandung, die durch beispielsweise eine Rippenstruktur oder durch rohrförmige Elemente miteinander verbunden sind, ist zum Beispiel auch für das Einlegeteil möglich.

Das Material, aus dem das Abstandselement gefertigt ist, ist vorzugsweise ein Polymermaterial, ein Metall oder auch eine Keramik.

Wenn ein Metall zur Fertigung des Abstandselements eingesetzt wird, so wird vorzugsweise ein Metallschaum oder ein Metallstrangpressprofil verwendet. Geeignete Metalle zur Herstellung des Abstandselements sind insbesondere Leichtmetalle, beispielsweise Aluminium oder Magnesium.

Bei Verwendung eines Polymermaterials zur Herstellung des Abstandselements wird vorzugsweise ein gegebenenfalls faserverstärkter thermoplastischer oder duroplastischer Kunststoff eingesetzt. Geeignete thermoplastische Kunststoffe sind zum Beispiel Polyolefine, beispielsweise Polyethylen oder Polypropylen, Polyvinylpolymere wie Polyvinylchlorid (PVC), Polyvinylacetale, Polyvinylether, Polyvinyllactame oder Polyvinylamine, Styrolpolymere, beispielsweise Polystyrol, Styrol-Acrylnitril-Copolymere, Acrylnitril-Butadien-Styrol, Polymere der (Meth-)Acrylsäure, beispielsweise Polyacrylsäure, Poly(meth-)acyrlsäureester, Polyacrylate, Polymethylmethacrylat, Polyacrylamid, Polycarbonate, Polyoxymethylen, Polyphenylenether, Polytetrafluorethylen, Polyphenylensulfid, Polyethersulfone, Polyetherketone, Polyimide, Polychinoxaline, Polychinoline, Polybenzimidazole, Polyamide, Polyester oder Polyurethane wie Polyisocyanate, Polyole, Polyetherpolyole, Polyesterpolyole. Insbesondere bevorzugt sind Polyamide, davon insbesondere Polyamid 6 und Polyamid 6.6.

Geeignete duroplastische Kunststoffe sind zum Beispiel Phenolharze (PF-Harze), Aminoplaste (UF- und MF-Harze), ungesättigte Polyesterharze (UP-Harze), Alkydharze und Epoxid-Harze (EP-Harze).

Insbesondere bei Einsatz einer Rippenstruktur für das Abstandselement sind die eingesetzten Polymere verstärkt. Zur Verstärkung werden üblicherweise Füllstoffe und/oder Additive, insbesondere faserförmige Füllstoffe und/oder Additive eingesetzt. Wenn faserförmige Füllstoffe und/oder Additive eingesetzt werden, so können Kurzfasern oder Langfasern verwendet werden. Als Fasern eignen sich insbesondere Glasfasern, Kohlenstofffasern und Aramidfasern. Neben Langfasern und Kurzfasern können auch Endlosfasern und Gewebe oder Rovings verwendet werden. Neben Fasern können auch weitere Füllstoffe und/oder Additive, die üblicherweise in Polymeren eingesetzt werden, enthalten sein. Derartige Füllstoffe und/oder Additive dienen im Allgemeinen zur Einstellung der Eigenschaften der Kunststoffe.

Neben dem Einsatz von strukturierten Abstandselementen, beispielsweise solchen, die Rippen aufweisen, ist es auch möglich, ein Vollmaterial als Abstandshalter einzusetzen. Dies hat jedoch den Nachteil, dass kaum Gewicht eingespart werden kann. Insbesondere im Kraftfahrzeugbau ist jedoch eine Gewichtsersparnis erwünscht, da mit einem geringeren Gewicht auch der Kraftstoffverbrauch reduziert wird.

Neben einem einteiligen Abstandselement oder einem Abstandselement, das nur aus einem Werkstoff gefertigt ist, ist es auch möglich, mehrteilige Abstandselemente einzusetzen. Auch können Abstandselemente verwendet werden, die aus Verbundmaterialien oder mehr als einem Material hergestellt werden.

Um zu vermeiden, dass sich das Einlegeteil und das Abstandselement relativ zueinander bewegen können, wird das Einlegeteil vorzugsweise fest mit dem Abstandselement verbunden. Die Verbindung kann dabei lösbar oder unlösbar sein. Eine Verbindung von Abstandselement und Einlegeteil kann zum Beispiel durch Schrauben, Klemmen, Ver-clipsen, Nieten oder Kleben erfolgen. Bei Verwendung eines Polymermaterials für das Abstandselement ist es auch möglich, dass das Einlegeteil vom Kunststoffmaterial für das Abstandselement umspritzt wird. Hierzu wird, insbesondere bei einem Spritzgießprozess zur Herstellung des Abstandselements, zunächst das Einlegeteil in das Werkzeug eingelegt und anschließend vom Kunststoff für das Abstandselement umspritzt. Hierbei kann das Einlegeteil teilweise oder vollständig umspritzt werden. Wenn das Abstandselement nicht durch Spritzguss hergestellt wird, so ist es weiterhin auch möglich, das Einlegeteil in das Abstandselement einzuschweißen oder einzugießen.

Bei einer festen Verbindung von Einlegeteil und Abstandselement ist es gegebenenfalls ausreichen, das Einlegeteil am Profil zu befestigen. Hierdurch wird auch das Abstandselement gehalten. Eine stabile Verbindung wird zum Beispiel dadurch erzielt, dass am Einlegeteil Laschen ausgebildet sind, die das Abstandselement umschließen und am Profil befestigt werden. Diese dienen gleichzeitig als zusätzliche Befestigungspunkte für das Einlegeteil. Alternativ ist es jedoch auch möglich, das Abstandselement direkt am Profil zu befestigen. Die Befestigung des Abstandselements am Profil kann ebenfalls kraft- oder formschlüssig erfolgen. Geeignete Befestigungsverfahren für das Abstandselement sind zum Beispiel Schrauben, Kleben oder Nieten, bevorzugt Kleben. Das Kleben des Abstandselements an das Profil kann zum Beispiel durch Verwendung eines Schaums erfolgen. Auch ist es möglich, insbesondere um eine Abdichtung zu erzielen, dass Abstandselement und Einlegeteil teilweise oder vollständig umschäumt werden. Jedoch können auch beliebige andere, dem Fachmann bekannte Abdichtungen eingesetzt werden. So kann zum Beispiel eine Abdichtung durch Verwendung von Dichtmaterial, beispielsweise eine Elastomerdichtung erfolgen.

Wenn das Einlegeteil und das Abstandselement umschäumt werden, so wird vorzugsweise ein Polyurethan-Schaum verwendet. Hierbei ist, insbesondere im Kraftfahrzeugbau, zum Beispiel möglich, zunächst das Polymermaterial für das Umschäumen zusammen mit dem Abstandselement und dem Einlegeteil in das Profil einzubringen. Als Polymerschaum wird vorzugsweise ein solcher eingesetzt, der durch Wärme aktiviert wird. Nach dem Einbringen von Einlegeteil und Abstandselement in das Profil wird das Profil durch ein kathodisches Tauchlackverfahren beschichtet. Durch den bei der kathodischen Tauchlackierung erfolgenden Wärmeeintrag beginnt das Polymer für den Polymerschaum zu schäumen. Alternativ können Einlegeteil und Abstandselement jedoch auch durch einteilige oder mehrteilige Dichtelemente umschlossen werden.

Das Einlegeteil und das Abstandselement wirken im Verbund mit dem zu verstärkenden Profil als hochfester Biegeträger. Bei dem erfindungsgemäß gestalteten hochfesten Biegeträger sind die besonders beanspruchten Außenbereiche, das heißt das Einlegeteil und das Profil, des Biegeträgers aus besonders steifen und/oder festen Werkstoffen. Zudem wird das Flächenträgheitsmoment des Biegeträgers durch das Abstandselement konstant hoch gehalten. Hierdurch können zum Beispiel eine gleichmäßigere Verteilung einer punktuell in das zu verstärkende Profil eingeleiteten Last auf den verstärkten Bereich und ein Verhindern vorzeitigen Knickens und/oder Beulens des Profils im verstärkten Bereich erzielt werden.

Ausführungsbeispiele der Erfindung sind in den Figuren dargestellt und werden in der nachfolgenden Beschreibung näher erläutert.

Es zeigen:
- Figur 1: eine dreidimensionale Darstellung eines erfindungsgemäßen Profils,
- Figur 2.1 bis 2.6: Querschnitte durch unterschiedlich gestaltete Einlegeteile,
- Figur 3.1 bis 3.5: unterschiedliche Methoden zur Verbindung von Einlegeteil und Abstandselement.

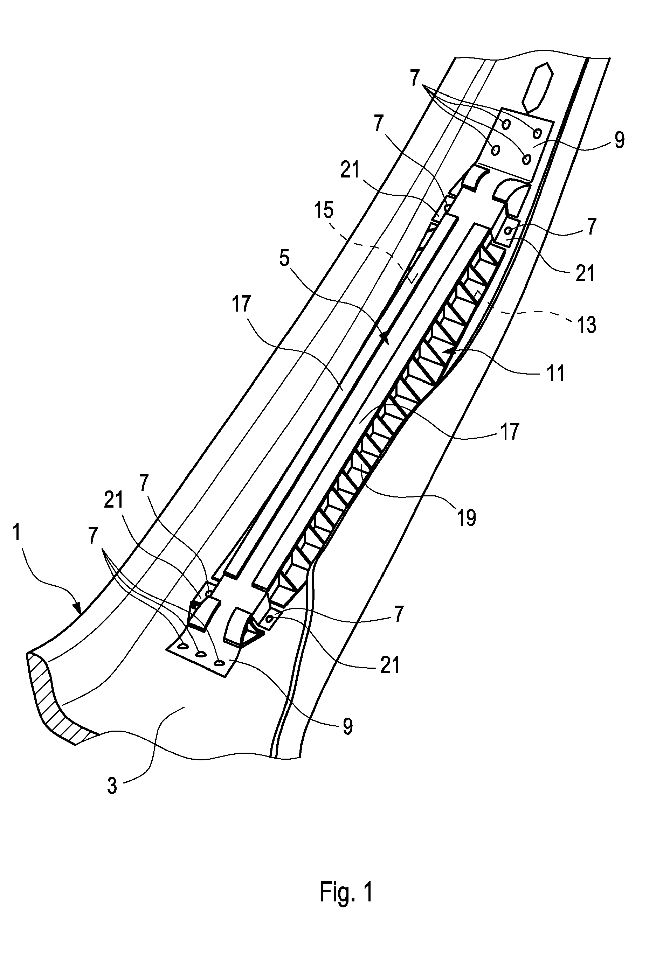

In Figur 1 ist eine dreidimensionale Darstellung eines erfindungsgemäß ausgebildeten Profils gezeigt.

Ein Profil 1 wird zum Beispiel als A-, B- oder C-Säule in einem Kraftfahrzeug eingesetzt. Auch ist der Einsatz beispielsweise als Stoßfänger, Schweller, Dachholm oder Längs- bzw. Querträger in einem Kraftfahrzeug möglich. Dargestellt ist in Figur 1 ein Profil 1 am Beispiel einer B-Säule.

Das Profil ist als U-Profil gestaltet. Mit einer Innenwandung 3 des Profils 1 ist ein Einlegeteil 5 verbunden. Das Einlegeteil 5 ist in der hier dargestellten Ausführungsform - ebenso wie das Profil 1 - aus einem metallischen Werkstoff, bevorzugt aus Stahl gefertigt. Das Einlegeteil 5 ist mit dem Profil 1 über Schweißpunkte 7 verschweißt. Hierbei ist das Einlegteil 5 mit seinen Endabschnitten 9 mit dem Profil 1 verbunden.

Neben einem metallischen Werkstoff, beispielsweise Stahl, kann das Profil selbstverständlich auch aus einem anderen Material, beispielsweise einem faserverstärkten Polymermaterial hergestellt werden. Wenn das Profil 1, wie hier dargestellt, als B-Säule für ein Kraftfahrzeug eingesetzt wird, so ist dieses jedoch üblicherweise aus Stahl gefertigt. Als Material für das Einlegeteil 5 eigneten sich neben Stahl auch polymere Werkstoffe oder Fasern. Hierbei ist lediglich darauf zu achten, dass das Material, aus dem das Einlegeteil 5 gefertigt ist, eine hohe Zugfestigkeit aufweist. Geeignete Materialien sind zum Beispiel, wie bereits vorstehend erwähnt, faserverstärkte Polymere, insbesondere glasfaserverstärkte Kunststoffe oder kohlefaserverstärkte Kunststoffe oder Fasern, zum Beispiel Gewebe aus Aramidfasern.

Zwischen dem Profil 1 und dem Einlegeteil 5 ist ein Abstandselement 11 positioniert. Das Abstandselement 11 liegt dabei mit einer Oberfläche 13 an der Innenwandung 3 des Profils 1 an und mit einer zweiten Oberfläche 15 am Einlegeteil 5. Damit das Einlegeteil 5 sich nicht gegenüber dem Abstandselement 11 verschieben kann, ist in der hier dargestellten Ausführungsform das Einlegeteil 5 von Laschen 17 des Abstandselements 11 teilweise umschlossen. Um das Einlegeteil 5, wie hier dargestellt, teilweise vom Abstandselement 11 zu umschließen, wird das Einlegeteil 5 vorzugsweise bei der Herstellung des Abstandselements 11 umspritzt. Damit das Abstandselement 11 1 Kräfte vom Profil 1 an das Einlegeteil 5 übertragen kann, weist das Abstandselement 11 in der hier dargestellten Ausführungsform Rippen 19 auf, die die Oberfläche 13 mit der zweiten Oberfläche 15 verbinden.

Eine weiter verbesserte Positionierung des Abstandselements 11 wird dadurch erzielt, dass am Einlegeteil 5 Laschen 21 ausgebildet sind, die jeweils im Endabschnitt 9 des Einlegeteils 5 das Abstandselement 11 umschließen und mit der Innenwandung 3 des Profils 1 verbunden sind. Die Verbindung der Laschen 21 mit dem Profil 1 erfolgt vorzugsweise auf die gleiche Art wie die Verbindung des Einlegeteils 5 mit dem Profil 1. In der hier dargestellten Ausführungsform zum Beispiel mit Hilfe von Schweißpunkten.

Derartige zusätzliche Anbindungen zwischen Einlegeteil 5 und Profil 1, wie beispielsweise durch die Laschen 21 realisiert, können an beliebiger Position und Anzahl in Längsrichtung des Einlegeteils 5 ergänzt werden.

Neben der Verbindung des Einlegeteils 5 mit dem Profil 1 durch Schweißpunkte ist selbstverständlich auch eine Verbindung beispielsweise durch Schrauben, Nieten oder Kleben möglich. Zusätzlich kann auch das Abstandselement 11 direkt mit dem Profil 1 verbunden werden. Hierzu kann das Abstandselement 11 zum Beispiel mit dem Profil 1 verklebt werden. Auch ein Anclipsen oder -nieten oder eine beliebige andere Befestigungsart ist denkbar. Bei einer formschlüssigen Verbindung des Abstandselements 11 1 mit dem Profil 1 ist jedoch darauf zu achten, dass das Abstandselement 11 und das Profil 1 unterschiedliche Wärmeausdünnungskoeffizienten aufweisen und sich somit unterschiedlich ausdehnen können. Dies muss durch die Befestigung kompensiert werden.

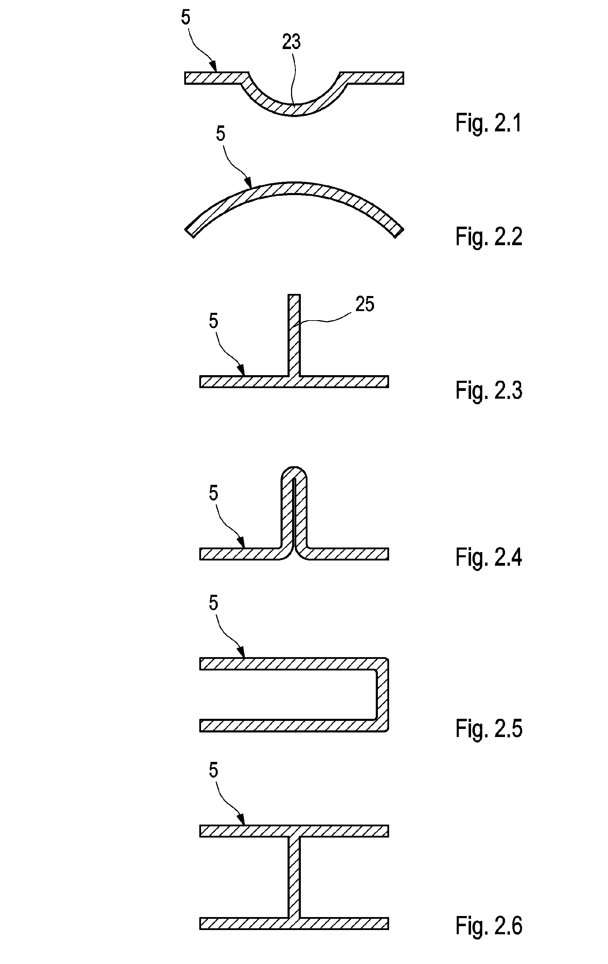

In den Figuren 2.1 bis 2.6 sind Querschnitte durch das Einlegeteil 5 dargestellt.

So kann das Einlegeteil 5 zum Beispiel wie in Figur 2.1 dargestellt eine oder mehrere Sicken 23 aufweisen. Auch ist es möglich, wie in Figur 2.2 dargestellt, das Einlegeteil 5 zu bombieren.

In der in Figur 2.3 gezeigten Ausführungsform weist das Einlegeteil 5 einen Steg 25 auf. Durch den Steg 25 wird das Einlegeteil 5 insbesondere auch gegen Torsion stabilisiert. Alternativ zu einem Steg 25 kann das Einlegeteil 5 auch gefalzt werden, wie dies zum Beispiel in Figur 2.4 dargestellt ist.

Neben den Einlegeteilen, wie sie in den Figuren 2.1 bis 2.4 dargestellt sind und jeweils aus einem flachen Element gefertigt sind, ist es auch möglich, das Einlegeteil zu profilieren. So kann das Einlegeteil zum Beispiel wie i Figur 2.5 dargestellt in Form eines U-Profils ausgebildet sein. Alternativ ist auch eine Gestaltung wie in Figur 2.6 gezeigt, möglich. So kann das Einlegeteil 5 zum Beispiel als Doppel-T-Träger geformt sein. Auch die Gestaltung als Hohlprofil, zum Beispiel mit einem rechteckförmigen, kreisförmigen oder ovalen Querschnitt ist möglich.

In denFiguren 3.1 bis 3.5 sind verschiedene Möglichkeiten dargestellt, wie das Einlegeteil 5 mit dem Abstandselement 11 verbunden werden kann.

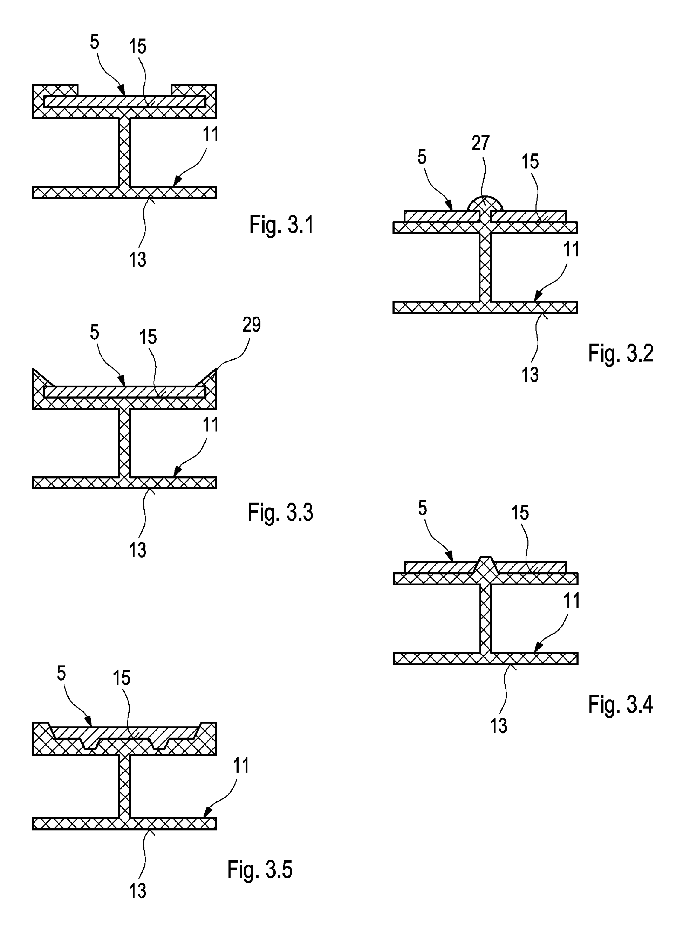

So ist es zum Beispiel möglich, wie in Figur 3.1 dargestellt, dass das Einlegeteil 5 teilweise oder vollständig vom Material des Abstandselements 11 umspritzt wird. Das Abstandselement 11 ist in den Figuren 3.1 bis 3.5 jeweils schematisch in Form eines Doppel-T-Trägers dargestellt.

Neben dem Umspritzen des Einlegeteils 5, wie es in Figuren 3.1 dargestellt ist, kann das Einlegeteil 5 jedoch zum Beispiel auch mit Kunststoffnieten 27 bzw. eine Durchspritzung, wie in Figuren 3.2 dargestellt, mit dem Abstandselement 11 verbunden sein.

Eine weitere Möglichkeit der Verbindung von Einlegeteil 5 und Abstandselement 11 ist die Verbindung durch Clipse 29, wie sie in Figur 3.3 dargestellt ist.

Weiterhin ist es möglich, das Einlegeteil 5 mit dem Abstandselement 11 zum Beispiel durch Einpressen oder Kragenfügen zu verbinden, wie es in den Figuren 3.4 und Figuren 3.5 dargestellt ist. Auch Kombinationen der Befestigungsarten, wie sie in den Figuren 3.1 bis 3.5 dargestellt sind, sind möglich.

### Bezugszeichenliste

- 1: Profil
- 3: Innenwand
- 5: Einlegeteil
- 7: Schweißpunkt
- 9: Endabschnitt
- 11: Abstandselement
- 13: Oberfläche des Abstandselements
- 15: Zweite Oberfläche des Abstandselements
- 17: Lasche
- 19: Rippe
- 21: Lasche
- 23: Sicke
- 25: Steg
- 27: Kunststoffniete
- 29: Clip

## Patentansprüche

1. Vorrichtung zur Verstärkung von Hohlprofilen oder U-Profilen (1), umfassend ein Einlegeteil (5), das in das Hohlprofil oder U-Profil (1) einlegbar ist und an seinen Endabschnitten (9) mit dem Hohlprofil oder U-Profil (1) verbindbar ist, **dadurch gekennzeichnet, dass** das Einlegeteil (5) aus einem Material mit einer hohen Zugfestigkeit gefertigt ist.

2. Vorrichtung gemäß Anspruch 1, **dadurch gekennzeichnet, dass** das Material aus dem das Einlegeteil (5) gefertigt ist, ausgewählt ist aus der Gruppe bestehend aus Stahl, Leichtmetall, faserverstärkten Polymeren oder Fasern.

3. Vorrichtung gemäß Anspruch 1 oder 2, **dadurch gekennzeichnet, dass** das Einlegeteil (5) bombiert und/oder gefalzt ist und/oder Sicken (23) im Einlegeteil (5) ausgebildet sind und/oder am Einlegeteil (5) Stege (25) ausgebildet sind und/oder das Einlegeteil (5) als Profil ausgebildet ist.

4. Vorrichtung gemäß einem der Ansprüche 1 bis 3, **dadurch gekennzeichnet, dass** das Einlegeteil (5) in Form eines Flachbandes, eines Rohres mit beliebigem Querschnitt oder als Seil ausgebildet ist.

5. Profil umfassend ein Einlegeteil (5), das aus einem Material mit einer hohen Zugfestigkeit gefertigt ist, sowie mindestens ein Abstandselement (11), das zwischen dem Einlegeteil (5) und dem Profil (1) positioniert ist, wobei das Einlegeteil (5) zumindest mit seinen Endabschnitten (9) an einer Wandung des Profils (1) befestigt ist.

6. Profil gemäß Anspruch 5, **dadurch gekennzeichnet, dass** das Abstandselement (11) aus einem Polymermaterial, aus einem Metallschaum oder einem Metallstrangpressprofil gefertigt ist.

7. Profil gemäß Anspruch 6, **dadurch gekennzeichnet, dass** das Polymermaterial ein gegebenenfalls faserverstärkter thermoplastischer oder duroplastischer Kunststoff ist.

8. Profil gemäß einem der Ansprüche 5 bis 7, **dadurch gekennzeichnet, dass** das Abstandselement (11) mit einer ersten Oberfläche (13) an dem Profil (1) und mit einer zweiten Oberfläche (15) am Einlegeteil (5) anliegt und zwischen den Oberflächen (13, 15) eine Rippenstruktur (19) ausgebildet ist.

9. Profil gemäß einem der Ansprüche 5 bis 8, **dadurch gekennzeichnet, dass** das Einlegeteil (5) Laschen (21) aufweist, die in Nuten im Abstandselement (11) geführt sind und mit dem Profil (1) verbunden sind.

10. Profil gemäß Anspruch 9, **dadurch gekennzeichnet, dass** die Laschen (21) jeweils an den Endabschnitten (9) des Einlegeteils (5) angeordnet sind.

11. Profil gemäß einem der Ansprüche 5 bis 10, **dadurch gekennzeichnet, dass** das Einlegeteil (5) zusätzlich Laschen aufweist, die über die Länge verteilt am Einlegeteil (5) angeordnet sind.

12. Profil gemäß einem der Ansprüche 5 bis 11, **dadurch gekennzeichnet, dass** das Profil (1) mindestens zwei Einlegeteile (5) umfasst, wobei die Einlegeteile (5) jeweils auf der gleichen Seite des Abstandselements (11) mit dem Profil (1) verbunden sind.

13. Profil gemäß einem der Ansprüche 5 bis 12, **dadurch gekennzeichnet, dass** das Abstandselement (11) eine Nut aufweist, in der das Einlegeteil (5) positioniert ist.

14. Profil gemäß einem der Ansprüche 5 bis 12, **dadurch gekennzeichnet, dass** das Einlegeteil (5) teilweise oder vollständig vom Abstandselement (11) umschlossen ist.

15. Profil gemäß einem der Ansprüche 5 bis 12, **dadurch gekennzeichnet, dass** das Einlegeteil (5) durch Clips (29), Kunststoffnieten (27) oder eine Durchspritzung oder durch Einpressen oder Kragenfügen mit dem Abstandselement (11) verbunden ist.

16. Verwendung des Profils gemäß einem der Ansprüche 5 bis 15 in einer Karosserie eines Kraftfahrzeugs.
